# DEMANDE DE BREVET EUROPEEN

(11) **EP 0 831 434 A1**
(43) Date de publication de la demande: **25.03.1998**
(21) Numéro de dépôt: 97401969.7
(22) Date de dépôt: 22.08.1997
(51) Int. Cl.: G07F 7/08

(54) **Procédé de fermeture, notamment de mise en opposition, d'une pluralité de services, et serveur de fermeture, terminal d'acceptation et dispositifs portatifs associés**

(30) Priorité: 29.08.1996 FR 9610555; 22.11.1996 FR 9614332
(71) Demandeur: Tchakgarian, Gérard, 75015 Paris (FR)
(72) Inventeur: Tchakgarian, Gérard, 75015 Paris (FR)
(74) Mandataire: Pontet, Bernard

(57) **Abrégé**

Procédé pour fermer, notamment mettre en opposition, une pluralité de services ouverts à un titulaire et associés ou non à des cartes accréditives ou de transaction.

Ce procédé comprend les séquences suivantes:
- on stocke préalablement, dans la mémoire d'une carte de fermeture de service, des données d'identification du titulaire et des données pour établir une communication entre tout terminal d'acceptation et un serveur commun de fermeture,
- on stocke préalablement, dans une base de référence opérationnelle au sein du serveur commun de fermeture, pour chaque titulaire concerné, des données pour identifier l'ensemble des services ouverts à ce titulaire, et des données pour établir une communication entre le serveur commun de fermeture et des sites de fermeture de ces services, et
- lorsque la carte de mise en opposition est couplée par un opérateur, notamment son titulaire, à un terminal d'acceptation, on effectue une séquence de fermeture sélective de services parmi la pluralité de services identifiés dans la base de référence.

## Description

La présente invention concerne un procédé de fermeture, notamment de mise en opposition, d'une pluralité de services. Elle vise également un serveur de fermeture pour la mise en oeuvre de ce procédé, ainsi que des terminaux d'acceptation et un dispositif portatif à mémoire associés.

On entend ici par service tout service offert à une personne physique ou morale de façon gratuite ou payante, à usage public ou privé. Ceci inclut:
- les services de nature administrative et officielle, tels que les services de l'identité, des passeports et visas,
- les services sociaux: sécurité sociale, allocations familiales, prestations servies par des administrations ou institutions publiques ou privées, carte santé,
- les services de nature financière: cartes de transaction financière (cartes de crédit, cartes de retrait, chèques, livrets de caisse d'épargne, etc..),
- les services de contrôle d'accès: badges et cartes d'accès, clefs manuelles ou électroniques.

Par carte de transaction, on entend des cartes désignées sous le terme de cartes à mémoire, cartes à microprocesseur, cartes à puce ou encore sous le terme anglo-saxon de "smart cards". Sous le terme de carte de transaction, on inclut ici les cartes bancaires, cartes de retrait, cartes de crédit, cartes prépayées, cartes d'accès à des réseaux téléphoniques, notamment cartes SIM, et plus généralement toute carte offrant à son titulaire des droits et des accès à des transactions de toute nature, notamment financière. La présente invention peut également concerner des cartes "santé" ouvrant droit à des prestations sociales, des cartes donnant accès à des services audiovisuels, et tout autre type de carte accréditive.

En cas de perte ou de vol d'une carte de transaction, il est impératif que son titulaire effectue une demande de mise en opposition dans les plus brefs délais pour ne pas avoir à assumer des opérations frauduleuses qui seraient commises par un tiers avec sa carte. Les organismes émetteurs de ces cartes de transaction fournissent aux titulaires les numéros de téléphone d'un ou plusieurs centraux d'opposition qui sont prévus pour recevoir et traiter des demandes de mise en opposition.

Le porteur d'une carte perdue ou volée téléphone à un centre d'appel et communique les données d'identification de sa carte, à savoir, un numéro de porteur qui peut comporter de 10 à 19 caractères, et une date d'expiration. Ces données d'identification sont saisies sur clavier et transmises à un serveur d'opposition de l'organisme émetteur. Le porteur reçoit une réponse phonique du résultat de la mise en opposition, sous la forme d'une référence d'opposition.

Mais il est fréquent que le titulaire d'une carte, constatant sa disparition, se trouve désemparé et ne soit pas en mesure d'effectuer sur le champ une demande de mise en opposition, soit parce qu'il n'a pas sur lui les références et données d'identification de sa carte, soit qu'il est hors de chez lui et n'a ni carte téléphonique ni numéro de téléphone lui permettant de contacter le central d'opposition à partir d'un publiphone. Or, les conséquences financières de tout délai dans la mise en opposition d'une carte de transaction peuvent être redoutables, et les systèmes actuels de mise en opposition sont souvent bien fragiles et laissent une part trop importante à l'initiative des titulaires de carte perdue ou volée.

Le brevet allemand DE-36 12 507 divulgue un procédé de mise en opposition d'un compte bancaire mettant en oeuvre une carte à piste magnétique insérable dans un automate bancaire.

Par ailleurs, se pose couramment le problème de la perte ou du vol d'un ensemble de cartes de transaction ou de cartes privatives qui étaient conservées par leur titulaire dans un portefeuille ou un porte-cartes. Il est alors nécessaire pour le titulaire d'effectuer autant de mises en opposition que de cartes. Se pose également pour le titulaire la question de savoir quelles sont les cartes effectivement volées ou perdues.

Plus généralement, au delà du problème de la mise en opposition, il existe de nombreuses situations dans lesquelles le bénéficiaire d'un service souhaite voir interrompre ce service à son gré, notamment lorsque ce service lui est facturé au temps passé. On peut par exemple citer le cas de services d'assurance qui peuvent être souscrits par exemple par jour, par semaine ou par mois. S'il souhaite mettre fin rapidement à un tel service, Le titulaire de ce service est en fait confronté à des difficultés semblables à celles qui peuvent être rencontrées pour la mise en opposition de services.

Le but de l'invention est de remédier à ces inconvénients en proposant un procédé de fermeture, notamment de mise en opposition, d'un ou plusieurs services, qui soit d'une utilisation très simple et ne nécessite pas de disposer de documents parfois dispersés pour rassembler les données d'identification nécessaires pour effectuer une demande de fermeture, notamment de mise en opposition, tout en procurant à son titulaire une preuve et une garantie de fermeture du service.

Cet objectif est atteint avec un procédé pour fermer un service ouvert à un titulaire, comprenant:
- un stockage préalable, dans des moyens de stockage non volatile d'un dispositif portatif de fermeture, des données d'identification du titulaire et des données d'accès pour établir une communication entre un terminal d'acceptation et un serveur de fermeture, et
- lorsque le dispositif portatif de fermeture est couplé par un opérateur, notamment son titulaire, à un terminal d'acceptation, une séquence de fermeture du service, cette séquence de fermeture comprenant une mise en connexion automatique du terminal d'acceptation auquel on a couplé le dispositif de fermeture avec le serveur de fermeture et une transmission vers ce serveur des données d'identification du titulaire.

Suivant l'invention, la séquence de fermeture comprend en outre:
- l'émission d'un certificat de fermeture de ce service,
- la transmission de ce certificat de fermeture par le serveur de fermeture vers le terminal d'acceptation auquel est couplé le dispositif portatif de fermeture, et
- l'inscription de ce certificat de fermeture dans les moyens de stockage non volatile du dispositif portatif de fermeture.

Ainsi, le titulaire d'une carte de transaction volée ou perdue n'a plus à se soucier de rassembler des informations relatives à sa carte et de contacter oralement un central d'opposition. Il lui suffit d'insérer le dispositif portatif, par exemple au format d'une carte à mémoire, dans l'interface de lecture d'un terminal d'acceptation pour qu'une demande de fermeture soit automatiquement transmise et traitée sans autre intervention de sa part que cette insertion.

Il est à noter que le procédé selon l'invention peut s'appliquer à toute fermeture de service, qu'elle présente un caractère irréversible comme une mise en opposition, ou un caractère réversible comme la fermeture provisoire d'un service d'assurances.

Dans une application avantageuse de l'invention à la fermeture d'une pluralité de services ouverts à un titulaire et associés ou non à des cartes accréditives ou de transaction, on stocke préalablement, dans des moyens de base de référence opérationnelle au sein d'un serveur commun de fermeture, pour chaque titulaire concerné, des données pour identifier l'ensemble des services ouverts à ce titulaire, et des données pour établir une communication entre le serveur commun de fermeture et des sites de fermeture de ces services, et lorsque le dispositif portatif de fermeture est couplé par un opérateur, notamment son titulaire, à un terminal d'acceptation, on effectue une séquence de fermeture sélective des services parmi la pluralité de services identifiés dans les moyens de base de référence.

On entend par serveur commun de fermeture de service, tout système informatique agencé pour recevoir et traiter des demandes de fermeture émanant d'un ensemble de terminaux d'acceptation. Ceci inclut généralement un serveur connecté d'une part, à un réseau de télécommunication, et d'autre part, à un centre informatique de traitement de fermeture de service qui peut d'ailleurs être distant du serveur.

La séquence de fermeture de service sélective comprend de préférence:
- une mise en connexion automatique du terminal d'acceptation auquel on a couplé le dispositif portatif de fermeture de service avec le serveur commun de fermeture, et
- une transmission vers ce serveur commun de fermeture des données d'identification du titulaire.

Cette séquence de mise en opposition sélective comprend en outre un dialogue entre le serveur commun de fermeture et l'opérateur du dispositif portatif de fermeture, pour sélectionner lesquels des services identifiés dans les moyens de base de référence doivent être effectivement mis en opposition.

De plus, on peut avantageusement prévoir, pour chaque service sélectionné, une mise en communication et un échange d'informations entre le serveur commun de fermeture et le site de fermeture du service concerné, cet échange d'informations comprenant une émission par le serveur commun de fermeture vers le site de fermeture d'une requête de mise en opposition comportant des données d'identification du titulaire de ce service.

Le procédé selon l'invention inclut également, pour chaque service sélectionné pour une fermeture, une information de confirmation d'exécution de la fermeture transmise par le site de fermeture au terminal d'acceptation auquel est couplé le dispositif portatif de fermeture via le serveur commun de fermeture.

La transmission de certificats de mise en opposition et leur inscription dans la mémoire du dispositif portatif constitue un avantage majeur de l'invention, notamment dans ses applications à la mise en opposition de services. En effet, la séquence de fermeture sélective peut en outre comprendre, pour chaque service mis en opposition:
- l'émission d'un certificat de mise en opposition de ce service,
- la transmission de ce certificat de mise en opposition par le serveur commun d'opposition vers le terminal d'acceptation auquel est couplé le dispositif portatif de mise en opposition, et
- l'inscription de ce certificat de mise en opposition dans les moyens de stockage non volatile du dispositif portatif de mise en opposition.

Il est à noter que ces certificats de mise en opposition ou de fermeture peuvent aussi bien être émis par les sites de fermeture ou par le serveur commun d'opposition qui peut alors assurer des services de notarisation.

Suivant un autre aspect de l'invention, il est proposé un serveur commun de fermeture, notamment d'opposition, mettant en oeuvre le procédé selon l'invention, caractérisé en ce qu'il est relié d'une part, via au moins un réseau de télécommunication à des terminaux d'acceptation adaptés pour coopérer avec des dispositifs portatifs de fermeture, et d'autre part, via des moyens de communication dédiés ou non, à des sites de fermeture.

Avec ce serveur commun de fermeture, on peut alors proposer un service de fermeture, notamment de mise en opposition, efficace et rapide qui dispense les utilisateurs de devoir contacter chaque site spécifique lié à un service.

Ce serveur commun comporte une base de référence opérationnelle comprenant, pour chaque titulaire de services, des données représentatives de ces services. Il n'est donc pas nécessaire que le dispositif portatif de fermeture contienne des données relatives à chaque service puisque ces données peuvent être avantageusement stockées au sein du serveur commun de fermeture qui assure l'ensemble des communications et échanges avec les différents sites associés aux services sélectionnés par l'utilisateur pour une demande de fermeture.

Suivant encore un autre aspect de l'invention, il est proposé des terminaux d'acceptation reliés via un réseau de télécommunication au serveur commun de fermeture, pourvus de moyens de couplage avec des dispositifs portatifs à mémoire, et adaptés pour communiquer avec des dispositifs portatifs de fermeture et assurer les échanges d'information entre ces dispositifs portatifs de fermeture et le serveur commun de fermeture. Cette adaptation consiste en pratique en l'implémentation d'une couche logicielle applicative supplémentaire conçue pour contrôler et identifier les dispositifs portatifs de fermeture et gérer un protocole de communication avec le serveur commun de fermeture.

La présente invention concerne également un dispositif portatif à mémoire, pour fermer une pluralité de services ouverts à un titulaire, mis en oeuvre dans le procédé selon l'invention, caractérisé en ce qu'il contient, dans ces moyens de stockage non volatile pour contenir des données d'identification de ce titulaire, et en ce qu'il est agencé pour transmettre automatiquement au serveur commun de fermeture, ces données d'identification via tout terminal d'acceptation pourvu de moyens de couplage avec ce dispositif portatif et relié via un réseau de communication à ce serveur commun de fermeture de service.

Ce dispositif portatif de fermeture peut de préférence comprendre en outre des moyens pour recevoir et stocker des certifications de mise en opposition émises par des sites de mise en opposition des services pour lesquels une mise en opposition a été demandée.

Suivant la politique tarifaire et commerciale de l'organisme gestionnaire du procédé de fermeture, on peut prévoir: (i) soit que chaque dispositif portatif de mise en opposition contienne un crédit d'unités téléphoniques (CU) préchargées pour couvrir les coûts de communication induits par une opération de mise en opposition, (ii) soit que le numéro d'appel du serveur commun d'opposition soit un numéro d'appel gratuit.

Le procédé de fermeture de service selon l'invention trouve des applications dans de nombreux domaines de la vie économique et sociale. Il s'applique d'ailleurs indifféremment à des services associés à des cartes à mémoire et à des services associés à d'autres supports, matériels ou immatériels.

S'agissant des supports de type carte à mémoire ou magnétique, on peut citer:
- dans le domaine des services de nature financière, toutes les cartes de crédit, cartes de débit, cartes de transaction (essence, téléphone, cartes multiservice (voyage, hôtel), cartes accréditives, cartes de magasin,
- dans le domaine social, les cartes de santé, et
- dans le domaine du contrôle d'accès, les cartes d'accès éventuellement multiservices.

Concernant les supports de services matériels (hors carte), on peut citer:
- dans le domaine administratif, l'ensemble des documents administratifs officiels émis par les administrations et les autorités,
- dans le domaine social, les cartes de sécurité sociale et de mutuelle, les carnets de santé, et
- dans le domaine financier, les carnets de chèques, les livrets, les documents financiers.

S'agissant des supports de service de nature immatérielle, on peut citer:
- les mots de passe et codes d'accès à des services, par exemple des services en ligne sur Internet ou sur Minitel.

La présente invention se propose ainsi d'offrir une ergonomie optimale pour un titulaire de services. Les terminaux d'acceptation doivent pour cela inclure la plus large gamme possible d'équipements, notamment les publiphones, les micro-ordinateurs, les guichets automatiques de banque GAB. Le dispositif portatif de fermeture de service selon l'invention, qui est proposé en pratique sous la forme d'une carte à mémoire, comprend des données d'identification du titulaire des services concernés par une fermeture, notamment une mise en opposition, et des données d'accès à un serveur commun de fermeture, qui sont lues par le terminal d'acceptation pour permettre une mise en communication de ce terminal avec le serveur commun de fermeture.

Par ailleurs, on peut avantageusement prévoir un enregistrement dans le dispositif portatif de fermeture de certificats de mise en opposition émis par les différents sites de mise en opposition associés à chaque service, ce qui permet d'éviter ainsi toute procédure administrative pour le porteur.

La présente invention devrait notamment contribuer à augmenter la sécurité générale du système des cartes bancaires, en procurant une rapidité de mise en opposition et une certification des oppositions.

Pour assurer les échanges d'information nécessaires entre les terminaux d'acceptation et les dispositifs portatifs de fermeture, il est nécessaire que ces terminaux d'acceptation soient dotés d'une couche logicielle applicative de communication terminal/dispositif de fermeture, qui peut être développée suivant des techniques logicielles classiques. A chaque type d'équipement utilisé comme terminal d'acceptation correspondra en pratique une couche applicative spécifique.

Un mode préféré de réalisation d'un dispositif portatif de fermeture selon l'invention consiste en une carte à mémoire au format standard actuel tel que celui d'une carte de transaction à mémoire. Cette carte de fermeture à mémoire est agencée pour être insérée dans tout terminal d'acceptation pourvu de moyens de couplage pour carte à mémoire et relié via un réseau de communication au serveur commun de fermeture.

Selon l'organisation et la politique tarifaire de l'organisme émetteur, on peut prévoir que la carte de fermeture selon l'invention contienne un crédit d'unités téléphoniques pour couvrir les coûts de communication induits par une opération de fermeture de service, ou bien que les numéros d'appel du serveur commun de fermeture soient des numéros PCV ou de type 0-800.

Par ailleurs, on peut prévoir un contrôle de valeur d'authentification (VA) effectué par le terminal d'acceptation préalablement à tout échange d'information.

Afin de limiter l'utilisation de la carte de fermeture à son titulaire ou ses ayant-droit, on peut prévoir qu'elle contienne un code personnel d'identification (PIN) qui est demandé lors de toute insertion de ladite carte dans un terminal d'acceptation.

D'autres particularités et avantages de l'invention apparaîtront encore dans la description ci-après. Aux dessins annexés donnés à titre d'exemples non limitatifs:
- la figure 1 illustre la mise en oeuvre du procédé de fermeture selon l'invention dans des systèmes de télécommunication et de transaction;
- la figure 2A illustre les étapes essentielles d'un procédé de fermeture multi-services selon l'invention;
- la figure 2B illustre les étapes essentielles d'un procédé d'opposition d'une carte de transaction;
- la figure 3A rassemble dans un tableau synoptique des étapes du procédé de fermeture selon l'invention; et
- la figure 3B rassemble dans un tableau synoptique des étapes du procédé d'opposition illustré par la figure 2B.

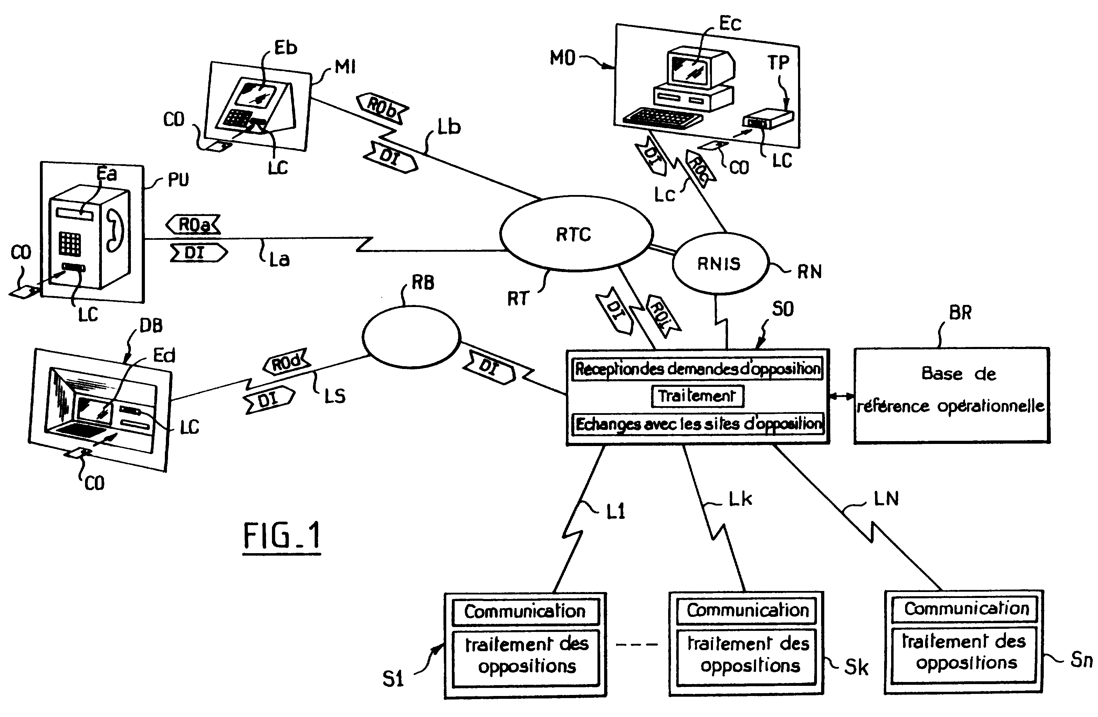

On va maintenant décrire, en référence aux figures 1, 2A, et 3A, des exemples d'utilisation de cartes de fermeture selon l'invention dans un contexte multi-services, en même temps que le procédé de fermeture mis en oeuvre avec ces cartes.

On considère (I) une personne titulaire T d'un ensemble de services SE comprenant par exemple des services financiers F1,..,Fk,..,Fn, un service de contrôle d'accès CA, un service de mutuelle santé MS, et des documents administratifs A1,..,Ai,..,Am. Pour chacun de ces services, il a souscrit un abonnement à un service de fermeture, notamment de mise en opposition, exploitant le procédé selon l'invention. Il détient donc une carte de fermeture CO dont la mémoire M contient:
- des données DA d'accès au serveur commun de fermeture SO,
- des données DI d'identification de la carte de fermeture CO, et
- un module DC de protocole de communication avec les terminaux d'acceptation.

Elle peut aussi contenir à titre optionnel:
- un crédit d'unités téléphoniques CU,
- des données DT d'authentification de la carte de fermeture, et
- un code personnel d'identification PIN de la carte de fermeture.

La mémoire M de la carte de fermeture peut également recevoir des certificats CI de mise en opposition. attestant de manière formelle de la mise en opposition effective des services dont la mise en opposition a été demandée.

Le service de fermeture exploitant du procédé selon l'invention gère un serveur commun de fermeture SO accédant à une base de référence opérationnelle BR. Cette base BR contient pour chaque titulaire T abonné au service, à une adresse A(T) associée à ce titulaire un ensemble R(T) de données de référence de services pour lesquels le titulaire T a souscrit une option de fermeture. Par exemple, cet ensemble de données de référence comprend des données personnalisées D(F1),..,D(Fk),..,D(Fn) relatives aux services financiers, des données D(CA) relatives au service de contrôle d'accès, des données D(MS) relatives au service de mutuelle, et des données D(A1),..,D(Ai),..,D(Am) relatives aux documents administratifs détenus par le titulaire T.

On considère maintenant la situation (II) dans laquelle se trouve le titulaire T lorsque tout ou partie des supports matériels ou immatériels associés aux services souscrits par ce titulaire se trouve perdu ou volé. Par exemple, le titulaire se fait voler son portefeuille qui contenait:
- deux cartes de crédit émises par deux institutions financières Fi, Fj,
- une carte de contrôle d'accès CA de son entreprise,
- son passeport Ak et son permis de conduire Al.

Le titulaire ou son ayant-droit se munit alors de sa carte de fermeture ou d'opposition CO rangée en lieu sûr et insère (III) cette carte dans un terminal d'acceptation TA. Un échange d'informations s'instaure en premier lieu entre la carte d'opposition CO et le terminal d'acceptation essentiellement à des fins d'authentification, puis le terminal d'acceptation entre en communication (IV) avec le serveur commun de fermeture SO et transmet à ce serveur des données d'identifications DI initialement contenues dans la mémoire M de la carte d'opposition CO.

Il est à noter que les opérations d'authentification peuvent également être effectuées à distance par le serveur commun de fermeture SO.

Le serveur commun de fermeture SO établit alors (V) un échange avec le terminal d'acceptation TA pour demander, en mode vocal et/ou visuel, à l'utilisateur de la carte d'opposition CO de sélectionner les services qu'il souhaite voir mettre en opposition. Cette sélection SL peut revêtir diverses formes, notamment faire suite à une énumération des services effectivement inscrits dans la base de référence opérationnelle BR, et faire appel à des codes DTMF.

Lorsque les services à mettre en opposition ont été sélectionnés, le serveur commun de fermeture entreprend alors (VI) une série de communications avec des sites spécifiques S(Fj), S(Fi), S(CA), S(Ak), S(Al) de fermeture ou de mise en opposition des services sélectionnés. Ces sites spécifiques reçoivent du serveur commun de fermeture SO des données personnalisées relatives aux services souscrits par le titulaire T, D(Fj, T), D(Fi, T), D(CA, T), D(Ak, T), D(Al, T) et émettent en retour des données de référence de fermeture ou d'opposition C(Fj, T), C(Fi, T), C(CA, T), C(Ak, T), C(Al, T).

A l'issue de ces opérations de fermeture, le serveur commun de fermeture SO transmet au terminal d'acceptation TA des références d'opposition ΣRO qui peuvent être communes pour l'ensemble des services qui viennent d'être fermés ou mis en opposition, ou bien propres à chaque service. Ces références sont transmises à l'utilisateur de la carte d'opposition CO soit sous forme vocale, soit sous forme visuelle ou encore sous forme imprimée. L'utilisateur reçoit ainsi une confirmation du bon déroulement des multiples mises en opposition. Par ailleurs, on peut avantageusement prévoir que le serveur commun d'opposition SO inscrive dans la mémoire M de la carte d'opposition CO un ensemble ΣCI de certificats de mise en opposition qui constituent alors une preuve de la réalité des mises en opposition.

L'enregistrement dans la base de référence BR des différents services souscrits par un titulaire et pouvant être mis en opposition avec le procédé selon l'invention peut bien sûr être effectuée de manière progressive dans le temps, par exemple au fur et à mesure de la souscription de services nouveaux, ou bien à la suite de sollicitations ultérieures.

La couche applicative de tout terminal d'acceptation TA contient nécessairement un protocole de communication avec la carte d'opposition CO. Elle peut optionnellement contenir un module d'authentification de la valeur VA, ainsi qu'un module de contrôle du PIN. Par ailleurs, les terminaux d'acceptation TA sont programmés pour recevoir et traiter les messages de référence d'opposition émis par le site central d'opposition. Les données de référence ΣRO sont fournies à l'utilisateur de la carte d'opposition CO soit sous une forme visuelle par affichage sur l'écran EC d'un terminal d'acceptation dans lequel la carte d'opposition CO a été insérée, soit sous une forme vocale pour un terminal équipé de moyens correspondants, ou sous tout autre forme de représentation disponible.

S'agissant de la carte de fermeture ou d'opposition, les données d'accès peuvent inclure un ou plusieurs numéros d'appel, et plus généralement, des données d'accès à un ou plusieurs serveurs communs de fermeture SO habilités à traiter les demandes de mise en opposition avec le procédé selon l'invention.

Les données d'identification DI contiennent l'ensemble des données nécessaires pour identifier un titulaire abonné au service de fermeture ou d'opposition et adresser la base de référence opérationnelle. Ces données d'identification DI sont transmises dans un premier temps au terminal d'acceptation TA. Celui-ci les transmet dans un second temps au serveur de fermeture SO.

On peut aussi prévoir que les cartes de fermeture ou d'opposition selon l'invention soient pourvues d'un code personnel d'identification (PIN) qui est alors demandé lorsqu'une carte est insérée dans le lecteur d'un terminal d'acceptation. Cette disposition aurait pour effet d'empêcher toute tentative de malveillance par un tiers de mettre en opposition une carte de transaction contre le gré de son titulaire. Cette option ne devrait cependant pas être systématiquement proposée ou imposée dans la mesure où l'efficacité du procédé de mise en opposition selon l'invention réside dans l'extrême simplicité de mise en oeuvre d'une carte de fermeture ou d'opposition. Dans l'hypothèse où le titulaire aurait égaré le PIN de sa carte de fermeture ou d'opposition, il se trouverait en effet dans l'impossibilité d'en faire usage en dépit du caractère urgent d'une mise en opposition.

Lorsqu'un organisme émetteur décide d'émettre une carte de fermeture ou d'opposition CO associée à un ou plusieurs services, soit sur requête du titulaire, soit comme un service proposé, cette carte CO est personnalisée suivant les procédures de l'état de l'art en couplant des informations d'identification du titulaire et des informations d'accès relatives à un ou plusieurs serveurs communs de fermeture ou d'opposition SO agréés. L'émission de la carte de fermeture ou d'opposition CO peut être effectuée en même temps que la souscription à un service, ou être effectuée ultérieurement.

Il est à noter que le procédé de fermeture selon l'invention peut être offert aux clients de manière très rapide et sans contrainte. Par exemple, un organisme financier peut fort bien, en même temps qu'il émet une carte de transaction, émettre dans le même temps une carte de fermeture ou de mise en opposition qui pourra être personnalisée sur place en utilisant des techniques connues de personnalisation. Il est bien sûr possible de prendre en compte une carte de fermeture déjà détenue par le client à laquelle sera associée, dans la base de références, le nouveau service souscrit. Il suffira en effet pour l'organisme émetteur de transmettre, de préférence par transfert informatique, au gestionnaire du serveur commun de fermeture les données d'identification de la carte de fermeture du client. Le gestionnaire complétera alors la base de référence du serveur en ajoutant le nouveau souscrit, par exemple une nouvelle carte de transaction, à la liste des services déjà prévus pour une fermeture. Les données d'identification peuvent d'ailleurs se réduire, à titre d'exemple non limitatif, à un numéro de série de la carte de fermeture ou de mise en opposition.

Plusieurs réseaux de communication peuvent être concernés par le procédé de fermeture ou de mise en opposition selon l'invention. Un premier type de réseau est constitué par les réseaux spécialisés RB des groupes bancaires qui connectent les terminaux bancaires, notamment les distributeurs automatiques de billet (DAB) et les guichets automatiques de banque (GAB). Ces réseaux font appel à des lignes spécialisées et possèdent des protocoles de communication spécifiques. Un second type de réseau est constitué par les réseaux téléphoniques commutés (RTC) auxquels sont reliés les terminaux vidéotex (Minitel) et les micro-ordinateurs équipés d'un modem, ainsi que les publiphones. Un troisième type de réseau est constitué par les réseaux numériques à intégration de service (RNIS ou ISDN). Enfin, le procédé de mise en opposition pourra être mis en oeuvre via le réseau Internet dès que des moyens indispensables de sécurisation des transactions financières seront mis au point et diffusés.

Ainsi, dans la vue synoptique donnée à titre d'exemple en figure 1, les terminaux d'acceptation incluent des publiphones PU et des terminaux Vidéotex MI reliés par des lignes téléphoniques La, Lb au réseau téléphonique commuté RT, des micro-ordinateur MO reliés au réseau numérique à intégration de services RN par une ligne numérique, et des terminaux bancaires DB reliés à un réseau de communication bancaire RB par des lignes de communication spécialisées LS. Le serveur commun de fermeture SO peut ainsi recevoir des demandes de fermeture ou de mise en opposition DIi et émettre en retour des références d'opposition ROi via une variété de réseaux de communication RB, RT, RN, ouverts ou fermés.

Après reconnaissance d'un appel par le serveur commun de fermeture SO, un échange d'informations est effectué entre le terminal d'acceptation PU, MI, DB, MO et le serveur commun de fermeture SO: des données d'identification DI sont transmises au serveur de fermeture SO qui, après sélection par l'utilisateur de la carte de fermeture ou d'opposition CO des services à fermer et/ou à mettre en opposition, entre alors en communication successivement ou en parallèle via des lignes de communication L1,..Lk,..LN spécialisées ou non, avec des sites S1,..,Sk,..Sn de fermeture ou de mise en opposition des services concernés. Ces sites traitent des demandes de fermeture ou de mise en opposition et en retour émettent des données de référence de fermeture ou d'opposition ROa, ROb, ROc, ROd qui sont alors transmises à l'utilisateur de la carte de fermeture ou d'opposition CO, soit sous une forme visuelle sur les écrans Ea, Eb, Ec, Ed des terminaux d'acceptation concernés, soit sous forme vocale, ou bien encore sous forme imprimée si le terminal d'acceptation concerné offre cette possibilité. Ces références de fermeture ou d'opposition peuvent constituer pour le titulaire ou son ayant-droit une preuve que la fermeture, et en particulier la mise en opposition, a bien été enregistrée.

Il est à noter qu'une autre application intéressante du procédé selon l'invention est la possibilité qu'il offre aux utilisateurs de consulter l'ensemble des services pour lesquels ils ont souscrit un servie de fermeture ou de mise en opposition, par une simple insertion de leur carte de fermeture dans un terminal d'acceptation.

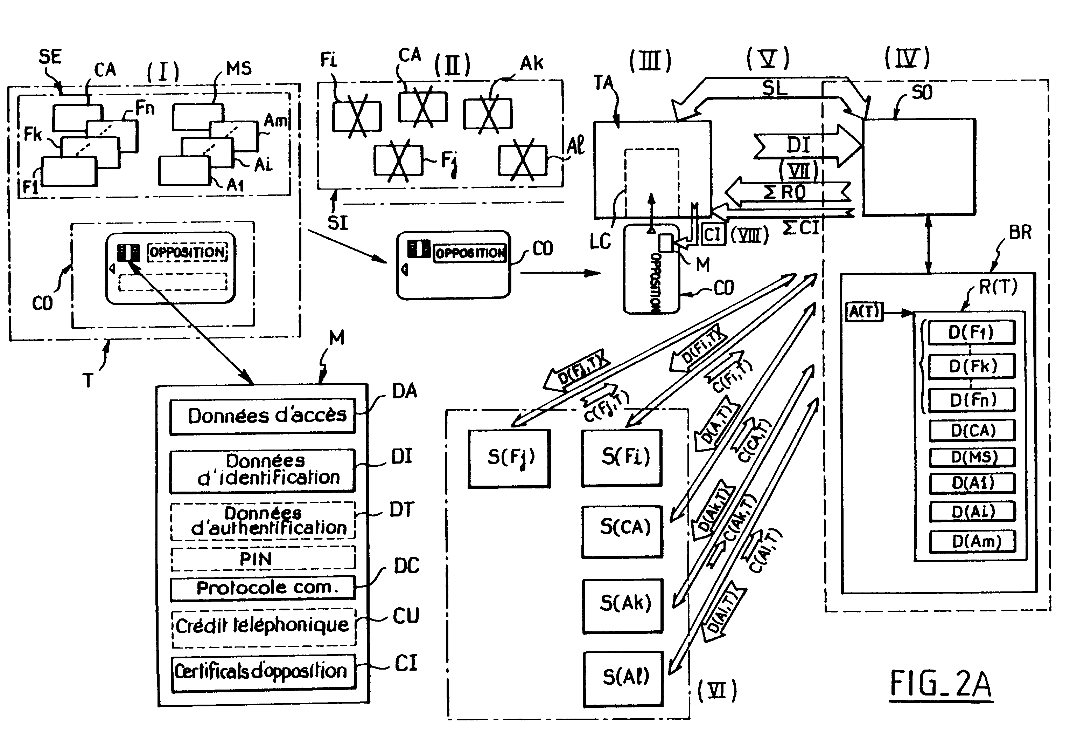

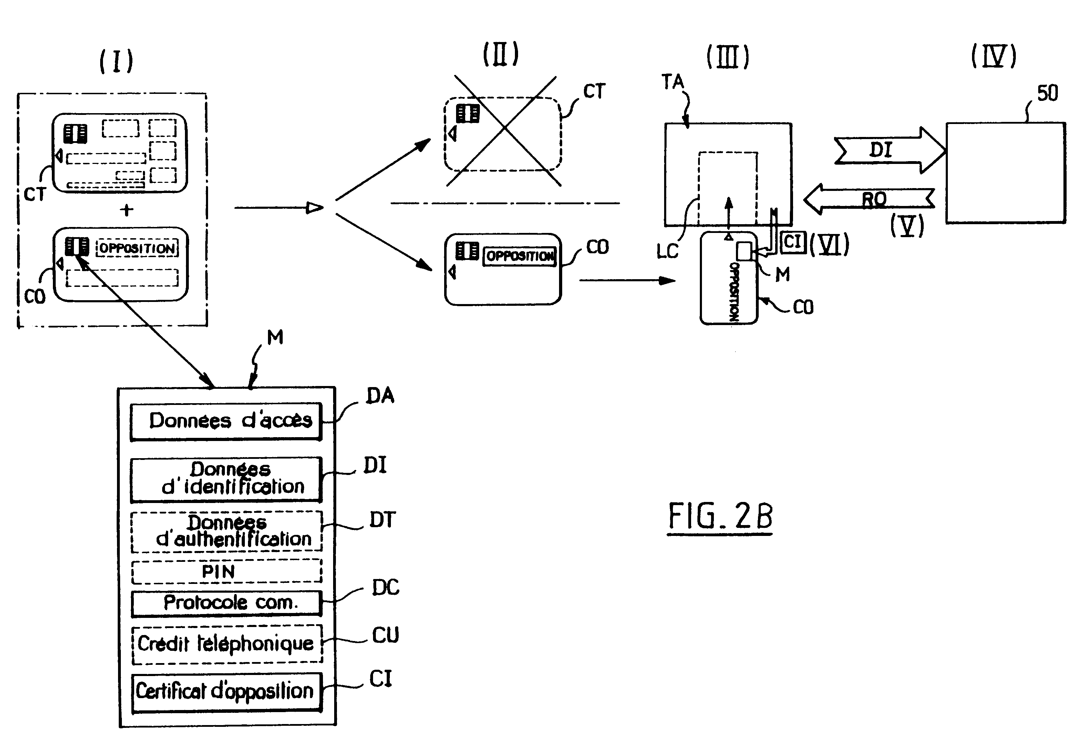

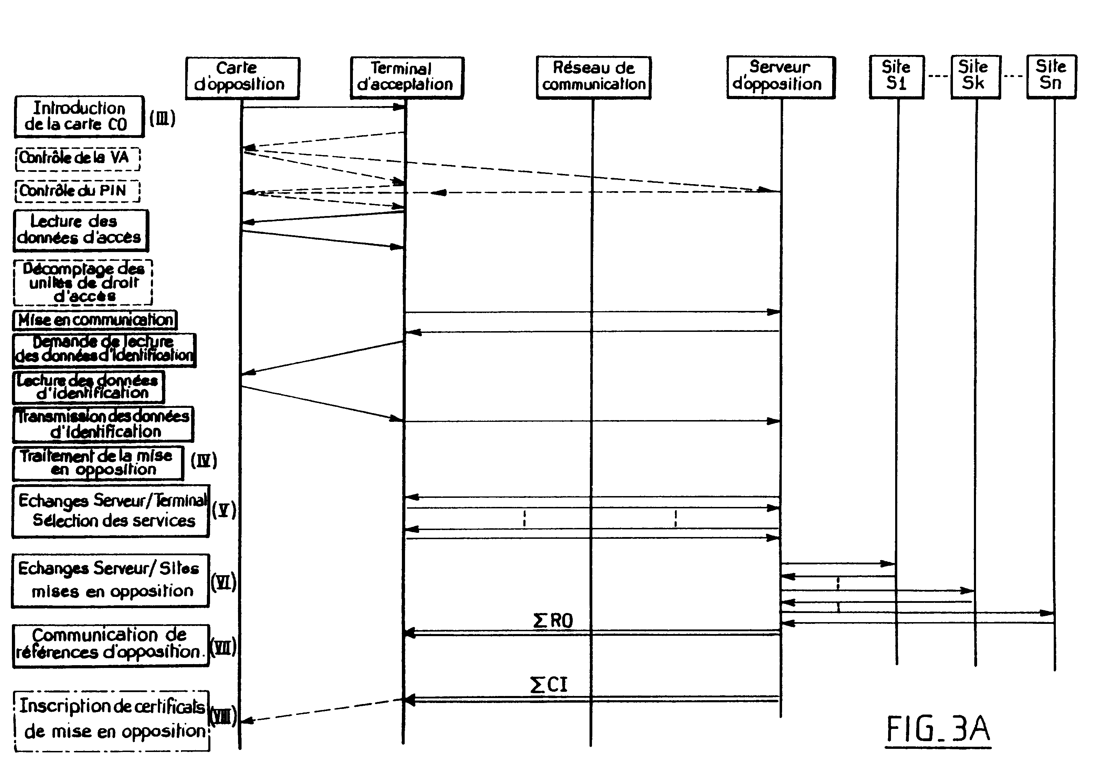

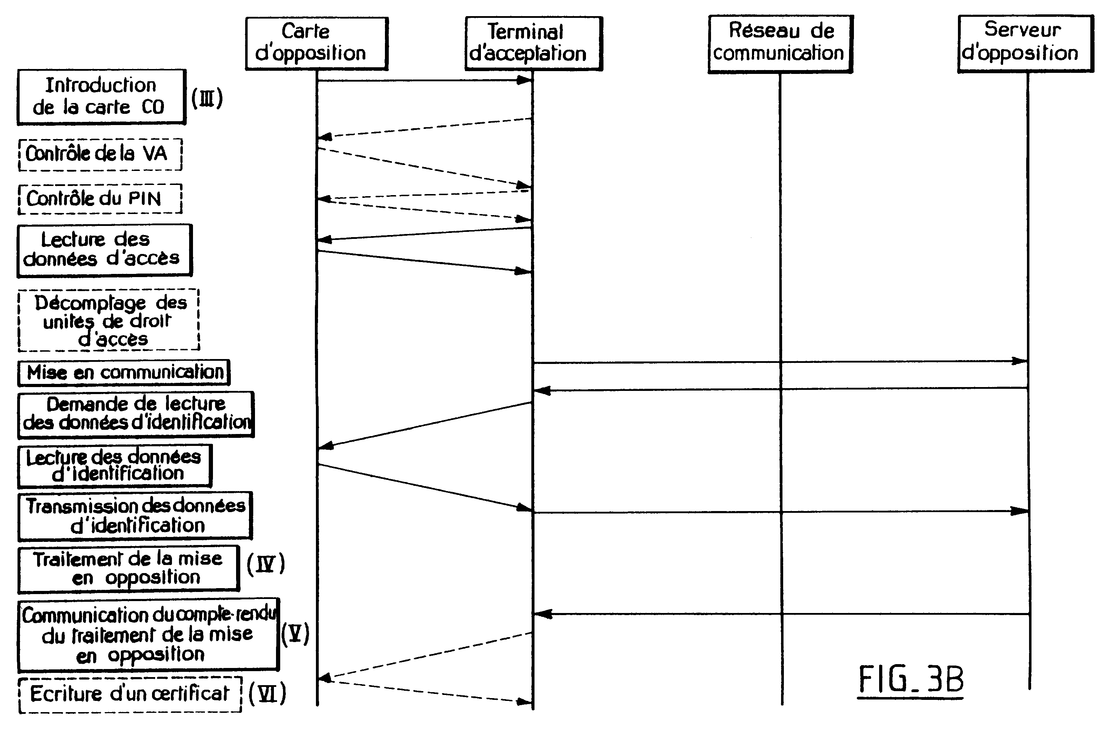

On va maintenant décrire, en référence aux figures 2B et 3B, une application particulière mono-service du procédé de fermeture selon l'invention, pour la mise en opposition d'une carte de transaction. Il est à noter que les éléments et composants communs au mode de réalisation multi-services précédemment décrit sont repérés par des références communes.

Un organisme émetteur propose à un client porteur d'une carte de transaction CT, une carte d'opposition CO qui lui est associée. Cette proposition peut correspondre à un service payant ou gratuit. L'émission de la carte d'opposition peut être simultanée avec celle de la carte de transaction, ou bien être effectuée ultérieurement.

La mémoire M de la carte d'opposition contient des données d'accès qui incluent un ou plusieurs numéros d'appel, et plus généralement, des données d'accès à un ou plusieurs serveurs d'opposition SO habilités à traiter les demandes de mise en opposition de cartes de transaction délivrées par l'organisme émetteur de cette carte.

Les données d'identification DI contiennent l'ensemble des données nécessaires pour effectuer une mise en opposition, par exemple le numéro de la carte de transaction, l'identification du titulaire ou de l'ayant-droit, éventuellement les dates de validité, le code secret PIN de la carte d'opposition, et d'autres données complémentaires.

On considère la situation initiale (I) dans laquelle le titulaire, ou un ayant-droit, détient à la fois une carte de transaction CT et la carte d'opposition CO qui lui est associée. Une recommandation importante est bien sûr de ne pas conserver les deux cartes dans un même endroit, la carte d'opposition CO devant par nature être accessible en cas de disparition de la carte de transaction CT, que ce soit du fait d'un vol, d'une perte ou d'une destruction.

Face à un constat de perte ou de vol (II), le titulaire de la carte de transaction CT disparue, prend ou fait prendre par un ayant-droit ou toute personne de son choix la carte d'opposition CO. La carte est alors introduite (III) dans un coupleur LC d'un des différents terminaux d'acceptation TA, qui peut être un publiphone PU, un distributeur automatique de billets DB, un micro-ordinateur MO équipé d'un terminal de télépaiement MI, ou un téléphone à carte fixe ou sans fil.

On peut à ce stade prévoir un contrôle de la valeur d'authentification VA de la carte d'opposition qui vient d'être introduite, afin de s'assurer qu'il s'agit bien d'une carte d'opposition authentique (contrôle par le terminal TA des données d'authentification DT). On peut aussi prévoir optionnellement que soit demandé un code personnel d'identification PIN à l'utilisateur de la carte d'opposition.

Après ces opérations de contrôle, le terminal d'acceptation TA effectue, dans le cadre du protocole de communication DC avec la carte d'opposition CO, une lecture des données d'accès DA. Si cela est prévu, un décomptage des unités téléphoniques CU stockées dans la carte d'opposition CO est mis en oeuvre. Le terminal d'acceptation TA initie la mise en communication avec le serveur d'opposition SO dont les références d'accès (numéro d'appel) étaient stockées dans la mémoire de la carte d'opposition CO. Lorsque la communication est établie, le serveur d'opposition SO envoie une demande de lecture des données d'identification DI. Le terminal TA lit alors les données d'identification DI stockées dans la mémoire M de la carte d'opposition CO, puis les transmet au serveur d'opposition SO. Ces données d'identification sont alors traitées (IV) et la mise en opposition est effectuée. Le serveur d'opposition transmet ensuite (V) un compte-rendu de traitement et une référence de mise en opposition RO au terminal d'acceptation TA qui les fournit à l'utilisateur de la carte d'opposition CO sous une forme vocale, visuelle ou imprimée. Il peut aussi être prévu une écriture (VI) d'un certificat d'opposition dans la mémoire M de la carte d'opposition CO.

La procédure de mise en opposition est ainsi automatiquement initiée sans requérir une intervention de la personne ayant inséré la carte d'opposition CO.

Bien sûr, l'invention n'est pas limitée aux exemples qui viennent d'être décrits et de nombreux aménagements peuvent être apportés à ces exemples sans sortir du cadre de l'invention. Ainsi, même si les exemples décrits visent des dispositifs portatifs à mémoire sous la forme de cartes à mémoire pouvant être insérées dans des lecteurs standards, on peut fort bien prévoir d'autres structures ou géométries pour ces dispositifs de fermeture ou d'opposition. De même, les protocoles de communication DC et les terminaux d'acceptation TA qui ont été cités dans la présente description ne doivent pas être considérés comme exhaustifs. Par ailleurs, on peut également prévoir que la carte d'opposition CO contienne un ou plusieurs protocoles de communication DC permettant de gérer directement un échange d'information entre cette carte de fermeture ou d'opposition et un serveur de fermeture ou d'opposition. le nombre de services pouvant être associés à une carte d'opposition peut être quelconque et ne pourrait être théoriquement limité que par les capacité de la base de référence opérationnelle.

## Revendications

1. Procédé pour fermer un service ouvert à un titulaire, comprenant:
- un stockage préalable, dans des moyens (M) de stockage non volatile d'un dispositif portatif de fermeture (CO), des données d'identification du titulaire et des données d'accès pour établir une communication entre un terminal d'acceptation (TA) et un serveur de fermeture (SO), et
- lorsque le dispositif portatif de fermeture (CO) est couplé par un opérateur, notamment son titulaire, à un terminal d'acceptation (TA), une séquence de fermeture du service, cette séquence de fermeture comprenant une mise en connexion automatique du terminal d'acceptation (TA) auquel on a couplé le dispositif portatif de fermeture (CO) avec le serveur de fermeture (SO) et une transmission vers ce serveur des données d'identification du titulaire,
caractérisé en ce que la séquence de fermeture comprend en outre:
- l'émission d'un certificat de fermeture de ce service,
- la transmission de ce certificat de fermeture par le serveur de fermeture (SO) vers le terminal d'acceptation (TA) auquel est couplé le dispositif portatif de fermeture (CO), et
- l'inscription de ce certificat de fermeture dans les moyens de stockage non volatile du dispositif portatif de fermeture.

2. Procédé selon la revendication 1, pour fermer une pluralité de services ouverts à un titulaire et associés ou non à des cartes accréditives ou de transaction, caractérisé en ce qu'on stocke préalablement, dans des moyens de base de référence opérationnelle (BR) au sein d'un serveur commun de fermeture (SO), pour chaque titulaire concerné, des données pour identifier l'ensemble des services ouverts à ce titulaire, et des données pour établir une communication entre le serveur commun de fermeture (SO) et des sites de fermeture de ces services (S1, Sk, Sn), et en ce que, lorsque le dispositif portatif de fermeture (CO) est couplé par un opérateur, notamment son titulaire, à un terminal d'acceptation (TA), on effectue une séquence de fermeture sélective de services parmi la pluralité de services identifiés dans les moyens de base de référence (BR).

3. Procédé selon la revendication 2, caractérisé en ce que la séquence de fermeture sélective comprend en outre un dialogue entre le serveur commun de fermeture (SO) et l'opérateur du dispositif portatif de fermeture (CO), pour sélectionner lesquels des services identifiés dans les moyens de base de référence (BR) doivent être effectivement fermés.

4. Procédé selon la revendication 3, caractérisé en ce que la séquence de fermeture sélective comprend en outre, pour chaque service sélectionné, une mise en communication et un échange d'informations entre le serveur commun de fermeture (SO) et le site de fermeture (S1, Sk, Sn) du service concerné, cet échange d'informations comprenant une émission par le serveur commun de fermeture vers le site de fermeture (S1, Sk, Sn) d'une requête de fermeture comportant des données d'identification du titulaire de ce service.

5. Procédé selon la revendication 4, caractérisé en ce que la séquence de fermeture sélective comprend en outre, pour chaque service sélectionné pour une fermeture, une information de confirmation d'exécution de la fermeture transmise par le site de fermeture (S1, Sk, Sn) au terminal d'acceptation (TA) auquel est couplé le dispositif portatif de fermeture (CO) via le serveur commun de fermeture (SO).

6. Procédé selon la revendication 1, pour mettre en opposition une carte de transaction (CT), notamment une carte de transaction financière, caractérisé en ce qu'il comprend:
- une insertion, dans un coupleur (LC) d'un terminal d'acceptation (TA) relié via un réseau de communication (RT, RB, RN) à un serveur d'opposition (SO), d'une carte d'opposition (CO) préalablement fournie et contenant des données d'identification (DI) de la carte de transaction (CT) et des données d'accès (DA) à ce serveur d'opposition (SO),
- une mise en connexion automatique de ce terminal d'acceptation (TA) avec le site central d'opposition (SO), à partir des données d'accès lues dans la carte d'opposition (CO), et
- une transmission vers ce serveur d'opposition (SO) des données d'identification (DI) de la carte de transaction (CT).

7. Procédé selon la revendication 6, caractérisé en ce qu'il comprend en outre une transmission d'un message de référence d'opposition (RO) émise par le serveur d'opposition (SO) à destination du terminal d'acceptation (TA) dans lequel la carte d'opposition (CO) a été insérée.

8. Dispositif portatif à mémoire (CO), pour fermer un service ouvert à un titulaire, pour la mise en oeuvre du procédé selon la revendication 1, comprenant des moyens (M) de stockage non volatile pour contenir des données d'identification (DI) de ce titulaire et agencé pour transmettre automatiquement au serveur de fermeture (SO) ces données d'identification via tout terminal d'acceptation (TA) pourvu de moyens de couplage avec ce dispositif portatif (CO) et relié via un réseau de communication (RB, RT, RN) au serveur de fermeture (SO), caractérisé en ce qu'il comprend en outre des moyens pour recevoir et stocker un certificat de fermeture (CI) émise par le site de fermeture (S1, Sk, Sn) du service pour lequel une fermeture a été demandée.

9. Dispositif portatif de fermeture (CO) selon la revendication 8, caractérisé en ce qu'il comprend en outre un crédit (CU) d'unités téléphoniques pour couvrir les coûts de communication induits pour un opération de fermeture.

10. Dispositif portatif (CO) selon l'une des revendications 8 ou 9, pour fermer une pluralité de services ouverts à un titulaire, caractérisé en ce qu'il est agencé pour transmettre automatiquement à un serveur commun de fermeture (SO) des données d'identification (DI) de ce titulaire.

11. Dispositif portatif à mémoire selon la revendication 10, caractérisé en ce qu'il comprend en outre des moyens pour recevoir et stocker des certificats de fermeture émises pour les différents sites de fermeture (S1, Sk, Sn) des services pour lesquels une fermeture a été demandée.

12. Terminal d'acceptation (TA) relié via un réseau de communication (RB, RT, RN) à un serveur de fermeture (SO), pour la mise en oeuvre du procédé selon l'une quelconque des revendications 1 à 7, caractérisé en ce qu'il est agencé pour échanger des informations avec un dispositif portatif à mémoire (CO) selon l'une quelconque des revendications 8 à 11.

13. Serveur de fermeture de service (SO) pour la mise en oeuvre du procédé selon l'une quelconque des revendications 1 à 7, caractérisé en ce qu'il est relié, d'une part, via au moins un réseau de communication (RB, RT, RN) à des terminaux d'acceptation (TA) adaptés pour coopérer avec des dispositifs portatifs de fermeture (CO), et d'autre part, via des moyens de communication (L1, Lk, Ln) dédiés ou non, à des sites de fermeture (S1, Sk, Sn).

14. Serveur commun de fermeture (SO) selon la revendication 13, caractérisé en ce qu'il est associé à des moyens de base de références (BR) comprenant, pour chaque titulaire de services, des données représentatives de ces services.

15. Application du procédé de fermeture selon l'une quelconque des revendications 1 à 7, à la mise en opposition de services de nature administrative, notamment des services de carte d'identité.

16. Application du procédé de fermeture selon l'une quelconque des revendications 1 à 7, à la mise en opposition de services de nature financière, notamment des services de carte de transaction.

17. Application du procédé de fermeture selon l'une quelconque des revendications 1 à 7, à la mise en opposition de services de nature sociale, notamment des services de carte de santé.

18. Application du procédé de fermeture selon l'une quelconque des revendications 1 à 7, à la mise en opposition de services de contrôle d'accès

19. Application du procédé de fermeture selon l'une quelconque des revendications 1 à 7, à la fermeture d'un service d'assurance.
